(19) Europäisches Patentamt
European Patent Office
Office européen des brevets

(11) **EP 4 438 159 A1**

(12) **EUROPEAN PATENT APPLICATION**

(43) Date of publication:
**02.10.2024 Bulletin 2024/40**

(21) Application number: **24164781.7**

(22) Date of filing: **20.03.2024**

(51) International Patent Classification (IPC):
**B01D 53/12** $^{(2006.01)}$    **B01D 53/62** $^{(2006.01)}$
**F23J 15/00** $^{(2006.01)}$    **B01D 53/81** $^{(2006.01)}$
**B01D 53/83** $^{(2006.01)}$

(52) Cooperative Patent Classification (CPC):
(C-Sets available)
**B01D 53/83; B01D 53/62; C04B 20/023;**
**C04B 28/02;** B01D 53/12; B01D 2251/404;
B01D 2251/604; B01D 2251/606; B01D 2257/504;
B01D 2258/0233; B01D 2258/0283          (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.03.2023 JP 2023059643**

(71) Applicant: **Tokuyama Corporation**
**Shunan-shi, Yamaguchi-ken 745-8648 (JP)**

(72) Inventors:
• **OMURA, Kohei**
  **Yamaguchi, 7458648 (JP)**
• **ONISHI, Takahiro**
  **Yamaguchi, 7458648 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **A METHOD FOR PRODUCING A COMPOSITION CONTAINING CALCIUM WITH FIXED CO2 AND AN APPARATUS THEREFOR**

(57)    A calcium-containing composition with fixed $CO_2$ is produced by contacting a mixture of a calcium-containing composition before $CO_2$ fixation and water with a $CO_2$-containing gas. The calcium-containing composition, liquid water, and the $CO_2$-containing gas having a temperature between 20 degree Celsius and 300 degree Celsius and a $CO_2$ concentration between 1 volume% and 100 volume% are supplied to a reactor.

By the supplied $CO_2$-containing gas, the calcium-containing composition and water are made to flow in the reactor. Alternatively, the calcium-containing composition and water are in the reactor. Thus, $CO_2$ is fixed in the calcium-containing composition and simultaneously the calcium-containing composition is dried to a water content of 5 mass% or less.

FIG. 1

Calcium-Containing Composition

Water

(a)
(b)
(c)
(d)
(e)
(f)
(g)
(h)
→ Exhaust Gas

→ Flows of Calcium Containing Compusition and Water
- - -> Flow of Exhaust Gas Containing CO2

CO2 Containing Gas

Calcium-Containing Composition Fixing CO2

EP 4 438 159 A1

(52) Cooperative Patent Classification (CPC): (Cont.)

C-Sets
**C04B 20/023, C04B 18/08, C04B 18/141,**
**C04B 18/0418, C04B 22/103;**
**C04B 28/02, C04B 14/28**

**Description**

Field of the Invention

The present invention relates to a method for producing a composition containing calcium with fixed $CO_2$ and an apparatus therefor.

Background Art

$CO_2$ is a greenhouse gas and thus has an impact on global warming. In recent years, the reduction of $CO_2$ emissions has been demanded worldwide, especially in developed countries. Therefore, it is necessary to reduce the generation of $CO_2$ and to recover and effectively reuse $CO_2$ that has been generated. In the industrial sector, $CO_2$ emissions from thermal power plants and cement manufacturing plants are relatively large. Therefore, attempts in these facilities to reduce $CO_2$ emissions with reducing the use of fossil fuels, recovering $CO_2$ from the exhaust gas, and fixing the recovered $CO_2$ have been made.

Patent Document 1, for example, describes an attempt to fix $CO_2$ in concrete. This document describes that $CO_2$ is fixed by the reaction of calcium hydroxide formed during cement hydration and $CO_2$ to calcium carbonate.

Patent Document 2 describes producing construction materials suitable for fixing $CO_2$ in a short time. Specifically, alkaline solid materials such as coal ash are placed in a portable container or the like, and carbon dioxide gas is introduced into the container to carbonate the alkaline solid materials. The carbonation proceeds more quickly than conventional contact of $CO_2$ with concrete. Further calcium components such as calcium oxide in alkaline solid materials such as coal ash and incinerator ash are carbonated to form the calcium carbonate.

Prior Art Documents

Patent Documents

Patent Document 1: JP 2020-37493A
Patent Document 2: JP 2021-155270A

Non-Patent Document

Akifumi MOTOHATA, et al, Carbonation for Immobilization of lead in bottom ash, Environmental Engineering Research, Vol. 41, 2004, p. p. 459 Environmental Engineering Research, Vol. 41, 2004, p.p. 459-467 (Japanese Article)

Summary of the Invention

Problem to be solved

Various attempts have been made to make calcium components carbonated to fix $CO_2$, and the presence of water has been found for the efficient reaction between the calcium components and $CO_2$. This has been speculated because the calcium components react with water and change into calcium hydroxide which reacts easily with $CO_2$ to form calcium carbonate. The chemical reaction between calcium oxide and $CO_2$ is represented, for example, by equations (1) and (2).

$$(1) \qquad CaO + H_2O \rightarrow Ca(OH)_2.$$

$$(2) \qquad Ca(OH)_2 + CO_2 \rightarrow CaCO_3 + H_2O.$$

For example, Non-Patent Document 1 describes the application of carbonation to insolubilize lead in incinerator ash. The document states that a large $CO_2$ amount is fixed when the water content of the incinerator ash is 10 to 20 mass%. However, since water is required for the $CO_2$ fixation, water remains problematically in the resultant product. For example, when the product is mixed with cement, the cement reacts undesirably with the water in the product. When the product is used during concrete production, the presence of water itself is allowable because water is mixed with cement and aggregate during the concrete production. However, since the exact water content can not be estimated, exact designing of the concrete becomes impossible, because the water content of the concrete becomes unknown. In addition, it becomes difficult to accurately control the water content because it varies upon various conditions, such as storage of the product and weather. Therefore, the presence of water in the product makes them less versatile due to the restrictions on their subsequent use.

On the other hand, when the product is dried separately from the carbonation, some energy is required. For example, when fossil fuels are used for the drying, they generate $CO_2$. Furthermore, both a reaction apparatus and a drying apparatus are required; the process is complicated.

Therefore, the problem of the invention is to obtain a flexibly usable carbonized calcium-containing product with low water content without emitting a large amount of $CO_2$ and under efficient carbonation conditions where water is present.

Means for Solving the Problem

The inventor has been studying the above problems. Through comprehensive study, the inventors have found that the $CO_2$-containing gas used for the reaction between the mixture and the gas is effectively usable for the drying of the mixture and that the carbonation and the drying is capable of being carried out in a single apparatus. Furthermore, the inventors have succeeded in obtaining a calcium-containing composition with a small water content and a sufficient fixed $CO_2$ amount. Thus, the present invention was completed.

According to the invention, a method is provided for producing a calcium-containing composition with fixed $CO_2$, by making a mixture of a calcium-containing composition before fixing $CO_2$ and water in contact with a $CO_2$-containing gas. The method comprises the steps of:

supplying into a reactor the calcium-containing composition, liquid water, and a $CO_2$-containing gas having a temperature not less than 20 degree Celsius and not more than 300 degree Celsius and a $CO_2$ concentration not less than 1 volume% and not more than 100 volume%; and

fixing $CO_2$ to the calcium-containing composition and simultaneously drying the calcium-containing composition by making the calcium-containing composition and the water flow in the reactor by the $CO_2$-containing gas supplied, or alternatively by agitating the calcium-containing composition and the water in the reactor, wherein the calcium-containing composition with fixed $CO_2$ has a water content not more than 5 mass%.

According to the invention, the fixing of $CO_2$ and the drying of the calcium-containing composition are carried out simultaneously in the reactor.

Preferably, the water amount mixed with 100 mass parts of the calcium-containing composition before fixing $CO_2$ in a dry state is made not less than 10 mass parts and more preferably, made not less than 10 mass parts and not more than 30 mass parts.

Preferably, the temperature of the $CO_2$-containing gas is made not lower than 60 degree Celsius and more preferably, made not lower than 100 degree Celsius.

Preferably, the water content of the calcium-containing composition with fixed $CO_2$ is made not more than 1 mass%. Further preferably, the $CO_2$ fixation and the drying are carried out in a single reactor, and most preferably, the reactor is a fluidized bed reactor.

Preferably, the $CO_2$-containing gas is extracted from a cement clinker production plant or extracted from a thermal power generation plant.

Preferably, the liquid water contains ammonia.

Preferably, the calcium-containing composition with fixed $CO_2$ is mixed into cement to a concentration not more than 5 mass%.

Preferably, the calcium-containing composition with fixed $CO_2$ is used as a concrete mixture material.

An apparatus according to the invention, for producing a calcium-containing composition with fixed $CO_2$, by making a mixture of a calcium-containing composition before fixing $CO_2$ and water in contact with a $CO_2$-containing gas, comprises:

a storage facility for storing the calcium-containing composition;
a fluidized bed reactor for carrying out carbonation of the calcium-containing composition;
a metered-volume feeder for supplying the calcium-containing composition to the fluidized bed reactor;
a water injection device for mixing water into the calcium-containing composition, before feeding to the fluidized bed reactor, preferably in the metered-volume feeder;
a blower for supplying the $CO_2$-containing gas to the fluidized bed reactor;
a dust collector for collecting dust contained in exhaust gas from the fluidized bed reactor; and
a blower for suctioning the exhaust gas from the dust collector.

Advantages of the Invention

According to the present invention, a calcium-containing composition with a small water content and a sufficient fixed $CO_2$ amount can be obtained without emitting a large amount of $CO_2$ and with the presence of enough water to accelerate the carbonation.

Brief Description of the Drawings.

Fig. 1 is a schematic diagram of an apparatus having a fluidized bed reactor for producing a calcium-containing composition with fixed $CO_2$, according to an embodiment.
Fig. 2 is a schematic diagram of the apparatus used in the test.
Fig. 3 is a characteristic diagram showing the major data in Table 3.
Fig. 4 is a characteristic diagram showing the major data in Table 4.
Fig. 5 is a schematic diagram of an apparatus according to a second embodiment.

Features for Carrying out the Invention

According to the present invention, a calcium-containing composition before carbonation is mixed with water, and, then, $CO_2$-containing gas is made into contact with the composition for both the carbonation and the drying of the mixture. This results in the low water content of the composition up to 5 mass%, and preferably, up to 1 mass%; here the $CO_2$-fixed calcium-containing composition (the resultant composition) is set at 100 mass%. The respective operations in the process, such as the mixing of the calcium-containing composition with water and the carbonation of the composition, may be performed continuously or in batches.

The calcium-containing composition before carbonation is not limited in the calcium content as long as the composition contains calcium. However, a high calcium content is preferable in order to sufficiently fix $CO_2$. Calcium-containing compositions include, for example, incinerator ash from general waste, coal ash generated in thermal power plants, biomass ash generated from biomass fuel or a mixture fuel of coal and biomass in thermal power plants, slag generated in iron and steel plants or other metal refining plants, sludge slag, cement, gypsum, quicklime, slaked lime, etc. However, if all of the calcium in the composition is calcium carbonate, further carbonation, ie. fixation of $CO_2$, is not possible, and such compositions are excluded from the calcium-containing compositions according to the present invention. Calcium-containing compositions having crystalline calcium are preferable in terms of good reactivity with $CO_2$. When all of the calcium is amorphous, the calcium is less reactive with $CO_2$ and less efficient in fixing $CO_2$. However, when at least some of the calcium in the composition is present in crystalline forms other than calcium carbonate, the composition can be used. Crystalline forms other than calcium carbonate include, for example, those of calcium oxide, calcium sulfate, calcium hydroxide, calcium silicate, calcium chloride, calcium aluminate, and so on. Whether the calcium is crystalline or amorphous can be determined by X-ray diffraction. The presence or absence and amount of crystalline calcium oxide can be determined by JCAS I-01-1997 "Determination Method for Free Calcium Oxide.

The type of water to be mixed with the composition before the carbonation is not limited. Tap water, industrial water, etc. can be used, and further, rainwater, seawater, wastewater, and cooling water generated from surrounding facilities and equipment can be used. The water contains preferably ammonia because the ammonia in the water promotes the carbonation. The concentration of ammonia is not particularly limited; 10 mass% of ammonia is sufficient and the ammonia concentration is, for example, from 1 to 10 mass%.

The water amount mixed with the calcium-containing composition before carbonation is preferably at least 10 mass parts to 100 mass parts of the composition in a dry state. More preferably, it is not less than 10 mass parts and not more than 30 mass parts. The larger the water content, the more the $CO_2$ fixation reaction is promoted, while too much water increases the time and energy required for drying. Water contents exceeding 30 mass parts do not result in a significant increase in the fixed $CO_2$ amount. Therefore, it is preferable to set the upper limit at 30 mass parts for practical use.

The calcium-containing composition and water are mixed before carbonation. In mixing, known techniques and equipment can be used. For example, during transport of the calcium-containing composition to the reactor, the composition can be sprinkled and mixed with water. Similarly, the calcium-containing composition and water can be supplied separately into a mixer and carbonized in the mixer, or then, uniformly fed to a separate reactor.

After the mixing or simultaneously with the mixing, the mixture of the calcium-containing composition and water is made in contact with a $CO_2$-containing gas. The $CO_2$ concentration of the gas is not particularly limited. However, in order to carry out the carbonation efficiently, it is preferable to supply a larger amount of $CO_2$ than the amount that the calcium-containing composition can fix. For example, suppose that a calcium-containing composition containing 1 mass% crystalline calcium oxide is fed into the reactor at 100 kg/hr to carry out the carbonation continuously. For example, calcium oxide capable of fixing $CO_2$ is supplied at a rate of 100 kg/hr x 1 mass% = 1 kg/hr. The carbonation of calcium oxide proceeds according to equations (1) and (2). Here, 1 kg of calcium oxide (molar mass: 56.1 kg/kmol) is 0.018 kmol according to equation (3). The $CO_2$ that reacts with 0.018 kmol of CaO consists of 0.018 kmol, according to equations (1) and (2). Therefore, assuming $CO_2$ is at standard temperature and pressure since the volume of 1 kmol of gas at standard temperature and pressure is 22.4 $Nm^3$ (normal cubic meter), 0.4 $Nm^3$ of $CO_2$ is required according to equation (4) below.

$$(3)\ \ 1\text{kg/hr} \ \div\ 56.1\text{kg/kmol} = 0.018\text{kmol/hr}.$$

$$(4)\ \ 22.4\text{Nm}^3\text{/kmol} \times 0.018\text{kmol/hr} = 0.4\text{Nm}^3\text{/hr}.$$

Thus, for example, when a calcium-containing composition containing 1 mass% crystalline calcium oxide is fed into the reactor at a rate of 100 kg/hr, it is desirable to supply $CO_2$ at a rate of 0.4 $Nm^3$/hr or higher. Then, when the $CO_2$ concentration of the gas is 1 volume%, preferably, the gas more than 40 $Nm^3$/hr is supplied to the reactor, and when the $CO_2$ concentration is 10 volume%, preferably, the gas more than 4 $Nm^3$/hr is supplied.

In the reaction apparatus, ie, the reactor, at the same time as $CO_2$ is fixed in the composition, the composition is dried. Generally, a gas with a higher temperature is suitable for drying. For example, gases extracted from thermal power plants, cement clinker plants, chemical product manufacturing plants, and waste incineration plants are suitable because they have a temperature above room temperature. The temperature of the gas is preferably above room temperature, but a too high temperature may be problematic, because water must intervene in the carbonation of the calcium-containing composition. When the gas temperature is too high, the calcium-containing composition dries out before the carbonation, and sufficient reaction time cannot be ensured. Therefore, the temperature of the gas supplied to the reactor is preferably adjusted to be 20 degree Celsius or higher and 300 degree Celsius or lower, more preferably, 60 degree Celsius or higher and 300 degree Celsius or lower, and, most preferably, 100 degree Celsius or higher and 200 degree Celsius or lower. When the temperature of the $CO_2$-containing gas is too low, the gas is preheated to a suitable temperature. The amount of $CO_2$ produced in the process shall be smaller than that fixed in the process. Therefore, when fossil fuels are used, the generated $CO_2$ amount shall be less than the fixed $CO_2$ amount. This does not apply when renewable or natural energy sources are used for heating the gas.

The time required for the reaction is set appropriately according to the amount of the mixture of calcium-containing composition and water supplied to the reactor, the amount, temperature, and concentration of $CO_2$-containing gas, and so on.

The relative humidity of the $CO_2$-containing gas is, for example, up to 90% and above 0%, preferably up to 60% and above 0%.

The $CO_2$ concentration of the $CO_2$-containing gas is preferably not less than 1 volume percent and not more than 100 volume%, more preferably, not less than 10 volume% and not more than 100 volume%, and, most preferably, not less than 20 volume% and not more than 100 volume%.

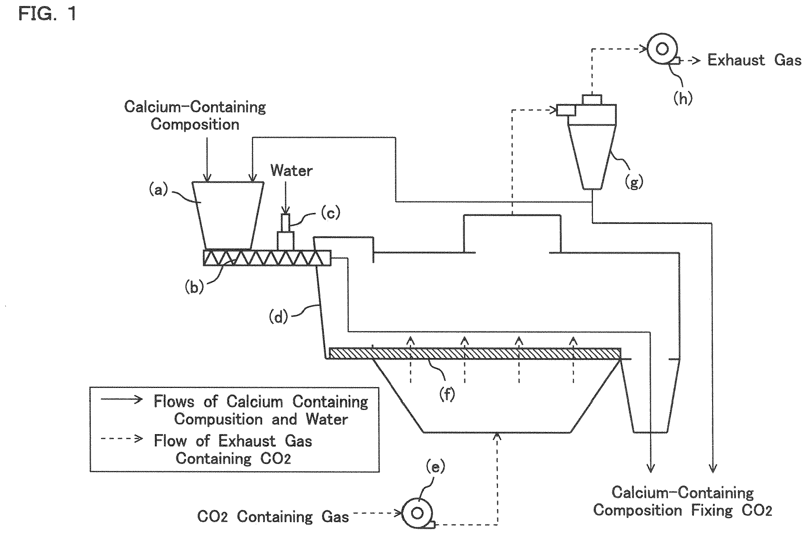

The reaction apparatuses usable are those capable of supplying powder, ie, the mixture, and gas and bringing them into contact. Suitable examples are fluidized bed reactors and rotary dryers. Fluidized bed reactors have been used for drying and incinerating powders as fluidized bed dryers and fluidized bed incinerators. The reaction apparatus of the embodiment will be described in detail with reference to Fig. 1; the invention is not limited to the embodiment.

In Fig. 1, a calcium-containing composition storage facility (a) stores calcium-containing compositions before carbonation. The calcium-containing composition is extracted downward from the storage facility (a) and then, transported and supplied to the fluidized bed reactor (d) by a constant volume metering device (b). In the process of transport, a water injection device (c) mixes a predetermined amount of water into the calcium-containing composition before carbonation. The mixture of calcium-containing composition and water is then supplied to the fluidized bed reactor (d). The solid arrows indicate the flow of the calcium-containing composition and water.

The $CO_2$-containing gas is supplied from the lower portion of the fluidized bed reactor (d) by a blower (e), as shown in Fig. 1. The gas is dispersed by a dispersion plate (f) and, then, comes into contact with the calcium-containing composition such that the carbonation, ie. the $CO_2$ fixation reaction, and the drying of the composition are both carried out. The exhaust gas is discharged from an upper portion of the reactor (d), and, after dust collection by a dust collector (g), exhausted by a blower (h). The powder collected by the dust collector (g) is returned to the storage facility (a) for storing the calcium-containing composition or mixed with the product, ie. the $CO_2$-fixedss calcium-containing composition.

The fixed $CO_2$ amount in the resultant calcium-containing composition varies depending on the type and composition of the calcium-containing composition used. Therefore, the fixed $CO_2$ amount is not limited. However, when considering the $CO_2$ amounts needed for the generation of the electricity in the production process and in the usage of

the $CO_2$-fixed calcium-containing composition, and generated by the fuel for transportation, a small fixed $CO_2$ amount in the composition is not meaningful. For this reason, it is preferable that at least 1 mass% of $CO_2$ is fixed when the calcium-containing composition after $CO_2$ fixation is 100 mass%. More preferably, at least 2 mass% of $CO_2$ is fixed. When the calcium-containing composition contains calcium carbonate prior to the fixation of $CO_2$, the amount of the pre-existing calcium carbonate is determined in advance. Specifically, the $CO_2$ amount originally contained in the calcium-containing composition before $CO_2$ fixation is subtracted from that after the carbonation. In principle, a TG-DTA apparatus is used in the measurement of the fixed $CO_2$ amount in the present invention. In the TG-DTA apparatus, a predetermined amount of the calcium-containing composition after $CO_2$ fixation is fed, and the temperature is increased from room temperature to 1000 degree Celsius in a nitrogen atmosphere at a rate of 10 degree Celsius/min. The fixed $CO_2$ amount is determined by the mass loss in the temperature range from 550 degree Celsius to 700 degree Celsius. Alternatively, the amount of calcium carbonate may be determined by, for example, a coulometer, a TOC meter, a CHN meter, or by X-ray diffraction/Rietveld method. In these measurements, the fixed $CO_2$ amount is determined to fully correlate to the TG-DTA measurement.

The water content of the calcium-containing composition as the product is to be up to 5 mass% where the total amount of the composition is 100 mass%. When the water content exceeds 5 mass%, the composition becomes difficult to be handle in the same way as usual dry powders. Preferably, the water content of the calcium-containing composition as the product is up to 1 mass%. When the product will be mixed with Portland cement or mixed cement, water content up to 1 mass% shall not make the cement and water react nor harden the cement before using the cement. In addition, when the product will be used as an ingredient for concrete, the water in the product shall not affect the quality of concrete or concrete mix design. For reference, fly ash is suitably mixed with cement and concrete, and JIS A 6201, "fly ash for concrete," requires the water content of fly ash for concrete is up to 1 mass%.

Thus produced calcium-containing compositions with fixing $CO_2$ are usable as it is or are mixed with other materials. Examples of usages include mixing into cement; mixing into cementitious materials such as cementitious solidifiers and mortars; and mixing into concrete.

Embodiments

Embodiments and comparative examples will be described below. The present invention is not limited to the embodiments.

The ash obtained from the co-combustion of coal and biomass fuel (hereinafter "biomass ash") was used as the calcium-containing composition before $CO_2$ fixation. The composition of the biomass ash measured by X-ray fluorescence analysis is shown in Table 1, and the types of calcium measured by X-ray diffraction/Rietveld method are shown in Table 2. The biomass ash contained 11.1 mass% of calcium in toal: 4.0 mass% of crystalline calcium oxide, which contributes to carbonation, and 0.5 mass% of calcium sulfate in oxide equivalents. In Tables 1 and 2, the content is shown in oxide reduction. Ten grams of the resultant calcium-containing composition after $CO_2$ fixation was placed on a stainless steel bat and dried in a dryer at 100 degree Celsius for 24 hours. The water content of the $CO_2$-fixed calcium-containing composition was calculated from the mass loss in this process.

The $CO_2$ amount originally contained in the biomass ash and the fixed $CO_2$ amount in the product after $CO_2$ fixation of a predetermined reaction time were measured by a TG-DTA apparatus. A predetermined amount of sample was fed into the TG-DTA apparatus, and the temperature was increased from room temperature to 1000 degree Celsius at a rate of 10 degree Celsius/min in a nitrogen atmosphere. The mass loss in the TG curve obtained in the range of 550 degree Celsius to 700 degree Celsius was assumed to be due to the decomposition of calcium carbonate, and defined as the fixed $CO_2$ amount. The fixed $CO_2$ amount in the calcium-containing composition was determined by subtracting the $CO_2$ amount originally contained in the biomass ash which was 1.5 mass%.

Table 1

| Material | Content (mass%) |
| --- | --- |
| water | 0.5 |
| Ignition Loss | 9.9 |
| $SiO_2$ | 44.2 |
| $Al_2O_3$ | 11.2 |
| $Fe_2O_3$ | 16.3 |
| CaO | 11.1 |
| MgO | 1.7 |
| $Na_2O$ | 1.9 |

(continued)

| Material | Content (mass%) |
|---|---|
| $K_2O$ | 1.6 |
| $TiO_2$ | 0.4 |
| $P_2O_5$ | 1.1 |
| Total | 100 |

Table 2

| Species of Calcium | | Content (mass%) |
|---|---|---|
| Sates Contributing to Carbonation | Calcium Oxide | 4.0 |
| | Calcium Sulphate | 0.5 |
| Sates Not Contributing to Carbonation | Calcium Carbonate | 1.9 |
| | Amorphous Calcium | 4.7 |
| Total | | 11.1 |

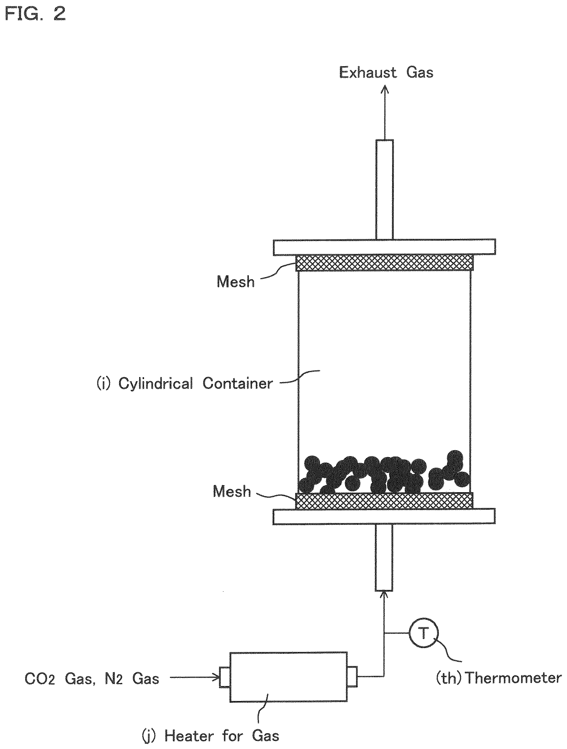

$CO_2$ fixation into the biomass ash was performed by the apparatus shown in Fig. 2. This apparatus simulates a fluidized bed reactor. A cylindrical vessel (i) with an inner diameter of 40 mm was covered with a mesh top and bottom, and a mixture of biomass ash and water was placed inside. In all cases, 50 g of biomass ash in a dry state was used, and 10 to 40 mass parts of water were pre-mixed with 100 mass parts of the dry biomass ash. As an alternative example, 20 mass parts of 10 mass% ammonia water were mixed with the dry biomass ash instead of simple water. Then, $CO_2$-containing gases were supplied through holes at the bottom of the apparatus, were made reacted with the biomass ash, and dried the biomass ash. The exhaust gases were discharged through a mesh at the upper portion. In Fig. 2, (j) denotes a heater for heating the gases, and (th) denotes a thermometer for measuring the gas temperature.

Commercially available carbon dioxide gas was used for preparing the $CO_2$-containing gas. Two $CO_2$ concentrations were tested: 100 volume% and 20 volume%. For adjusting the $CO_2$ concentration to 20 volume%, commercially available N2 gas was mixed with $CO_2$.

The temperature of the gas supplied to the reactor was set at three values: 20 degree Celsius; 60 degree Celsius; and 100 degree Celsius. To maintain the temperatures, the gas was heated to the temperatures before being supplied into the cylindrical vessel.

The flow rate of the $CO_2$-containing gas was kept to 10 L/min at standard temperature and pressure, regardless of the $CO_2$ concentration.

Tables 3, 4, and 5 show the reaction conditions and results. Items (1) through (7) in the tables mean the following:

(1) Water amount mixed into 100 mass parts of the calcium-containing composition (in mass parts);
(2) $CO_2$ concentration of the $CO_2$-containing gas (in volume percent); and
(3) Temperature of the $CO_2$-containing gas (in degree Celsius)
(4) Reaction time (in minutes);
(5) The fixed $CO_2$ amount in the resultant calcium-containing composition (the $CO_2$ amount originally contained in the calcium-containing composition is subtracted);
(6) The ratio of the fixed $CO_2$ amount (mass%) to the maximum fixed $CO_2$ amount (mass%) without the water addition (hereinafter "the reference ratio"); and
(7) The water content (in mass%) of the resultant $CO_2$-fixed calcium-containing composition.

Table 3

| Examples | (1) Water | (2) $CO_2$ % | (3) T | (4) Reaction Time (min.) | (5) Fixed $CO_2$ | (6) Ratio to Ref. | (7) Water (mass%) |
|---|---|---|---|---|---|---|---|
| Comp. 1 | 0 | 100 | 20 | 10 | 1.1 | 0.9 | 0 |
| Comp. 2 | 0 | 100 | 20 | 20 | 1.2 | 1.0 | 0 |
| Comp. 3 | 0 | 100 | 20 | 30 | 1.2 | 1.0 | 0 |
| Comp. 4 | 0 | 100 | 20 | 60 | 1.2 | 1.0 | 0 |

(continued)

| Examples | (1) Water | (2) $CO_2$ % | (3) T | (4) Reaction Time (min.) | (5) Fixed $CO_2$ | (6) Ratio to Ref. | (7) Water (mass%) |
|---|---|---|---|---|---|---|---|
| Comp. 5 | 10 | 100 | 20 | 10 | 1.7 | 1.4 | 7.4 |
| Comp. 6 | 10 | 100 | 20 | 20 | 1.7 | 1.4 | 6.8 |
| Comp. 7 | 10 | 100 | 20 | 30 | 1.6 | 1.3 | 6.2 |
| Emb. 1 | 10 | 100 | 20 | 60 | 1.7 | 1.4 | 4.2 |
| Emb. 2 | 10 | 100 | 20 | 90 | 1.7 | 1.4 | 0.4 |
| Comp. 8 | 20 | 100 | 20 | 10 | 2.1 | 1.8 | 17.2 |
| Comp. 9 | 20 | 100 | 20 | 20 | 2.0 | 1.7 | 16.5 |
| Comp. 10 | 20 | 100 | 20 | 30 | 2.1 | 1.8 | 13.7 |
| Comp. 11 | 20 | 100 | 20 | 60 | 2.1 | 1.8 | 8.3 |
| Emb. 3 | 20 | 100 | 20 | 90 | 2.1 | 1.8 | 3.3 |
| Emb. 4 | 20 | 100 | 20 | 120 | 2.1 | 1.8 | 0.8 |
| Comp. 12 | 30 | 100 | 20 | 10 | 2.9 | 2.4 | 26.5 |
| Comp. 13 | 30 | 100 | 20 | 20 | 2.7 | 2.3 | 23.9 |
| Comp. 14 | 30 | 100 | 20 | 30 | 2.9 | 2.4 | 22.2 |
| Comp. 15 | 30 | 100 | 20 | 60 | 3.1 | 2.6 | 14.3 |
| Comp. 16 | 30 | 100 | 20 | 90 | 3.0 | 2.5 | 6.9 |
| Emb. 5 | 30 | 100 | 20 | 120 | 3.1 | 2.6 | 2.9 |
| Emb. 6 | 30 | 100 | 20 | 180 | 3.1 | 2.6 | 0.2 |
| Comp. 17 | 40 | 100 | 20 | 10 | 2.8 | 2.3 | 38.2 |
| Comp. 18 | 40 | 100 | 20 | 20 | 2.9 | 2.4 | 34.8 |
| Comp. 19 | 40 | 100 | 20 | 30 | 3.1 | 2.6 | 31.0 |
| Comp. 20 | 40 | 100 | 20 | 60 | 3.0 | 2.5 | 22.8 |
| Comp. 21 | 40 | 100 | 20 | 90 | 3.0 | 2.5 | 14.1 |
| Comp. 22 | 40 | 100 | 20 | 120 | 2.9 | 2.4 | 7.3 |
| Emb. 7 | 40 | 100 | 20 | 180 | 3.0 | 2.5 | 3.0 |
| Emb. 8 | 40 | 100 | 20 | 210 | 3.1 | 2.6 | 0.9 |

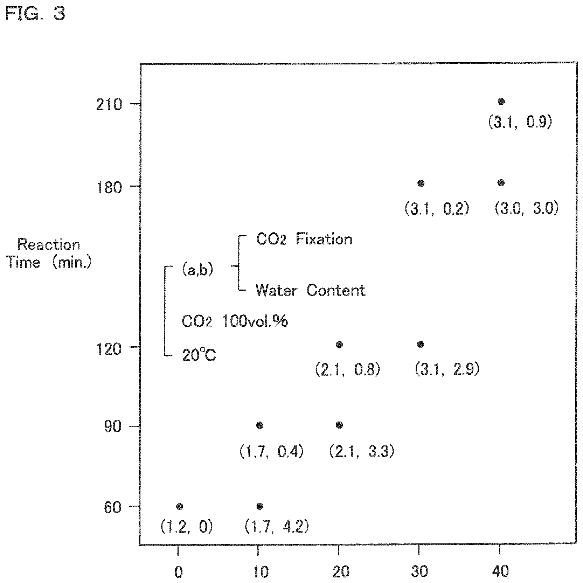

Table 3 shows the results when the $CO_2$ concentration of the gas was fixed at 100 volume% and the gas temperature was fixed at 20 degree Celsius. The major data in Table 3 are reproduced in Fig. 3. The horizontal axis indicates the water amount mixed into the calcium-containing composition and the vertical axis indicates the reaction time. The data indicate the pair of the fixed $CO_2$ amount and the water content of the resultant calcium-containing composition, after $CO_2$ fixation. A short reaction time, a high fixed $CO_2$ amount, and a low water content are desirable. From Fig. 3, it was found that the amount of mixed water is preferably not less than 10 mass parts and not more than 30 mass parts.

Comparative examples 1-4 indicate those without water addition. The fixed $CO_2$ amount remained constant after the reaction of 20 minutes and was 1.2 mass% at maximum. In the following, the standard ratios in item (6) in the tables are the fixed $CO_2$ amounts relative to the maximum fixed $CO_2$ amount (1.2 mass%) without water addition.

In Comparative Examples 5-7 and Embodiments 1 and 2, 10 mass parts of water were mixed with 100 mass parts of the calcium-containing composition. With mixing 10 mass parts of water, the fixed $CO_2$ amount increased to 1.7 mass%, with a standard ratio of 1.4. According to Comparative Examples 5-7 with a reaction time up to 30 minutes, the water contents of the resultant calcium-containing composition were not suitable in exceeding 5 mass%. In Embodiment 1 with a reaction time of 60 minutes, the resultant water content was 4.2 mass% and suitable. In Embodiment 2, the resultant water content was 0.4 mass% and more suitable for use.

In Comparative Examples 8-11 and Embodiments 3 and 4, 20 mass parts of water were mixed with 100 mass parts of the calcium-containing composition. With mixing 20 mass parts of water, the fixed $CO_2$ amount increased further to 2.1 mass% at maximum, with a standard ratio of 1.8. In Comparative Examples 8-11 with a reaction time up to 60 minutes, the water content of the resultant $CO_2$-fixed calcium-containing composition was not suitable in exceeding 5 mass%. In Embodiment 3 with a reaction time of 90 minutes, the resultant water content was 3.3 mass% and suitable. In Embodiment 4, the resultant water content was 0.8 mass% and more suitable.

In Comparative Examples 12-16 and Embodiments 5 and 6, 30 mass parts of water were mixed with 100 mass parts of the calcium-containing composition. With mixing 30 mass parts of water, the fixed $CO_2$ amount increased further to 3.1 mass% at maximum with the standard ratio of 2.6. In Comparative Examples 12-16 with a reaction time up to 90 minutes, the water content of the resultant composition was not suitable in exceeding 5 mass%. In Embodiment 5 with a reaction time of 120 minutes, the resultant water content was 2.9 mass% and suitable. In Embodiment 6, the resultant water content was 0.2 mass% and more suitable.

In Comparative Examples 17-22 and Embodiments 7 and 8, 40 mass parts of water were mixed with 100 mass parts of the calcium-containing composition. While 40 mass parts of water were mixed, there was found no significant difference in the fixed $CO_2$ amount compared to those with 30 mass parts of water. The water content of the resultant composition was not suitable in exceeding 5 mass% up to 120 minutes, as in Comparative Examples 17-22. In Embodiment 7 with a 180 minutes, the resultant water content was 3.0 mass% and suitable. In Embodiment 8, the resultant water content was 0.9 mass% and more suitable.

In Comparative Examples 17-22 and Embodiments 7 and 8, while the water contents of the resultant compositions were similar compared to those in Comparative Examples 12-16 and Embodiments 5 and 6, the drying process required more time. Considering the relatively high water contents and the relatively large energy for drying, water addition over 30 mass parts was found not suitable under the conditions of these examples.

Table 4

| Examples | (1) Water | (2) $CO_2$ % | (3) T | (4) Reaction Time (min.) | (5) Fixed $CO_2$ | (6) Ratio to Ref. | (7) Water (mass%) |
|---|---|---|---|---|---|---|---|
| Comp. 23 | 20 | 20 | 20 | 10 | 2.6 | 2.1 | 17.2 |
| Comp. 24 | 20 | 20 | 20 | 20 | 2.3 | 1.9 | 15.4 |
| Comp. 25 | 20 | 20 | 20 | 30 | 2.3 | 1.9 | 13.7 |
| Comp. 26 | 20 | 20 | 20 | 60 | 2.4 | 2.0 | 9.0 |
| Emb. 9 | 20 | 20 | 20 | 90 | 2.3 | 1.9 | 4.1 |
| Emb. 10 | 20 | 20 | 20 | 120 | 2.3 | 1.9 | 1.0 |
| Comp. 27 | 20 | 20 | 60 | 10 | 2.3 | 1.9 | 10.2 |
| Emb. 11 | 20 | 20 | 60 | 20 | 2.3 | 1.9 | 4.4 |
| Emb. 12 | 20 | 20 | 60 | 30 | 2.3 | 1.9 | 0.9 |
| Emb. 13 | 20 | 20 | 100 | 10 | 2.4 | 2.0 | 4.0 |
| Emb. 14 | 20 | 20 | 100 | 20 | 2.3 | 1.9 | 1.0 |

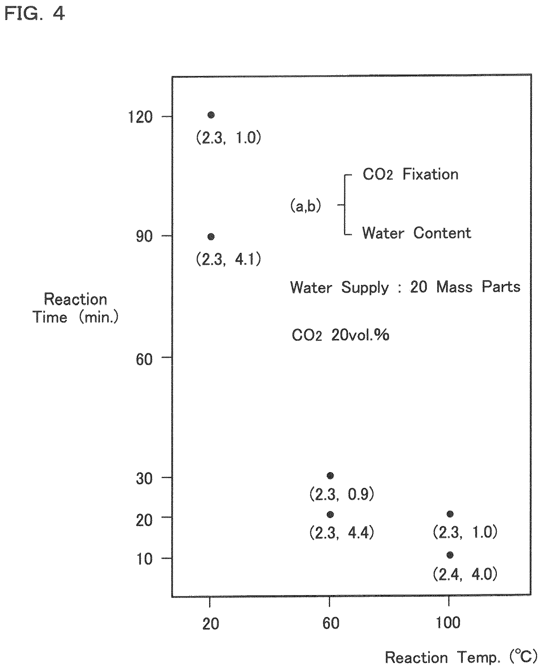

Table 4 shows the results where 20 mass parts water was mixed to 100 mass parts of calcium-containing composition and the $CO_2$ concentration of the gas was set to 20 volume%. The major data in Table 4 are reproduced in Fig. 4. In Fig. 4, the horizontal axis indicates the reaction temperature and the vertical axis indicates the reaction time. Fig. 4 indicates the pairs of the fixed $CO_2$ amount and the water content of the resultant calcium-containing composition after $CO_2$ fixation. A short reaction time, a high fixed $CO_2$ amount, and a low water content are desirable. Fig. 4 shows that a reaction temperature of 60 degree Celsius or higher is preferable, and 100 degree Celsius or higher is more preferable.

In Comparative Examples 23-26 and Embodiments 9-10, the $CO_2$ concentration of the gas was reduced to 20 volume% from the conditions in Comparative Examples 8-11 and Embodiments 3-4. Compared to Comparative Examples 8-11 and Embodiments 3-4, the fixed $CO_2$ amounts were almost the same. The required time for reducing the water content of the resultant composition up to 5 mass% was also 90 minutes, which was equivalent to those in Comparative Examples 8-11 and Embodiments 3-4. Thus, it was found that, in the $CO_2$ fixation reaction, the $CO_2$ concentration can be low as long as sufficient $CO_2$ is supplied for the reaction with the calcium-containing composition.

In Comparative Example 27 and Embodiments 11 and 12, the temperature of the gas was set at 60 degree Celsius. Compared to Comparative Examples 23-26 and Embodiments 9 and 10 where the temperature was 20 degree Celsius, the fixed $CO_2$ amount was almost the same. The water contents of the resultant composition decreased to 4.4 mass% at 20 minutes and to 0.9 mass% at 30 minutes. Thus, a suitably usable $CO_2$-fixed calcium-containing composition was obtained in a shorter time.

In Embodiments 13 and 14, the temperature of the gas was set at 100 degree Celsius. Compared to Comparison 27 and Embodiments 11 and 12 where the temperature was 60 degree Celsius, the fixed $CO_2$ amounts were almost the same. The water content of the resultant $CO_2$-fixed calcium-containing composition decreased to 4.0 mass% at 10 minutes and to 1.0 mass% at 20 minutes, and thus a suitably usable, $CO_2$-fixed calcium-containing composition was obtained in a shorter time.

Table 5

| Examples | (1)10% Ammonia Water (mass%) | (2) CO$_2$ % | (3) T | (4) Reaction Time (min.) | (5) Fixed | (6) Ratio CO$_2$ | (7) to Ref. |
|---|---|---|---|---|---|---|---|
| Comp. 28 | 20 | 20 | 20 | 10 | 3.3 | 1.8 | 17.0 |
| Comp. 29 | 20 | 20 | 20 | 20 | 3.3 | 1.8 | 14.6 |
| Comp. 30 | 20 | 20 | 20 | 30 | 3.5 | 1.9 | 12.6 |
| Comp. 31 | 20 | 20 | 20 | 60 | 3.1 | 1.7 | 8.4 |
| Emb. 15 | 20 | 20 | 20 | 90 | 3.4 | 1.8 | 3.9 |
| Emb. 16 | 20 | 20 | 20 | 120 | 3.4 | 1.8 | 0.9 |

In Table 5, the calcium-containing compositions of 100 mass parts were mixed with 20 mass parts of 10 mass% ammonia water; the CO$_2$ concentration of the gas was set to 20 volume%, and the temperature of the gas was set to 20 degree Celsius.

In Comparative Examples 28-31 and Embodiments 15 and 16, 10 mass% ammonia water was used instead of simple water. Compared to Comparative Examples 23-26 and Embodiments 9 and 10, the fixed CO$_2$ amounts increased to 3.5 mass% at maximum with the maximum standard ratio of 1.9. The time until the water content of the resultant composition became below 5 mass% was similarly 90 minutes. In other words, the addition of ammonia water accelerated the CO$_2$ fixation reaction.

Embodiment 2

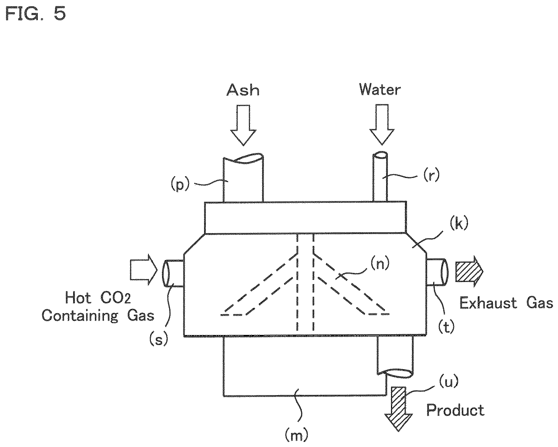

In the fluidized bed reactor (d) of Fig. 1, CO$_2$ was absorbed quickly and a small amount of thermal energy was required to obtain a dry, CO$_2$-fixed calcium-containing composition. This is because the fluidized bed brings the calcium-containing composition into uniform contact with the CO$_2$-containing gas. However, the fluidized bed reactor (d) is not suitable for small-scale plants. A second embodiment of a reactor suitable for small-scale plants is shown in Fig. 5.

An agitator blade (n) is placed in a closed housing (k) and rotated by a motor (m). Calcium-containing compositions such as incinerated ash are fed through the ash inlet (p), and water is fed through the water inlet (r). CO$_2$-containing gas is introduced from the gas inlet (s), and, from the exhaust gas outlet, exhaust gas after supplying CO$_2$ to the calcium-containing composition and receiving water vapor is discharged. The resultant calcium-containing composition with fixed CO$_2$ is then discharged from the outlet (u). The apparatus in Fig. 5 has lower CO$_2$ absorption efficiency and lower thermal efficiency than the apparatus in Fig. 1. However, the apparatus in Fig. 5 is smaller in scale and has lower equipment costs than the apparatus in Fig. 1. The embodiment of Fig. 5 is the same to the embodiment in Figs. 1 to 4, except for specifically noted points.

List of Symbols

(a) Calcium-containing composition storage facility
(b) Constant volume feeding device
(c) Water injection device
(d) Fluidized bed reactor
(e) Blower
(f) Dispersion plate
(g) Dust collector
(h) Blower
(k) Housing
(m) Motor
(n) Agitator blade
(p) Ash inlet
(r) Water inlet
(s) CO$_2$-containing gas inlet
(t) Exhaust gas outlet

(u) Product outlet

**Claims**

1. A method for producing a calcium-containing composition with fixed $CO_2$, by making a mixture of a calcium-containing composition before fixing $CO_2$ and water in contact with a $CO_2$-containing gas, **characterized by** the steps of:

   supplying into a reactor the calcium-containing composition, liquid water, and a $CO_2$-containing gas having a temperature not less than 20 degree Celsius and not more than 300 degree Celsius and a $CO_2$ concentration not less than 1 volume% and not more than 100 volume%; and
   fixing $CO_2$ to the calcium-containing composition and simultaneously drying the calcium-containing composition by making the calcium-containing composition and the water flow in the reactor by the $CO_2$-containing gas supplied, or by agitating the calcium-containing composition and the water in the reactor,
   wherein the calcium-containing composition with fixed $CO_2$ has a water content not more than 5 mass%.

2. The method for producing a calcium-containing composition with fixed $CO_2$ according to claim 1, **characterized in that** the calcium-containing composition before fixing $CO_2$ is at least one member of the group consisting of ash, slag, and sludge.

3. The method for producing a calcium-containing composition with fixed $CO_2$ according to claim 1, **characterized in that** the water amount mixed with 100 mass parts of the calcium-containing composition before fixing $CO_2$ in a dry state is made not less than 10 mass parts.

4. The method for producing a calcium-containing composition with fixed $CO_2$ according to claim 3, **characterized in that** the water amount mixed with 100 mass parts of the calcium-containing composition before fixing $CO_2$ in a dry state is made not less than 10 mass parts and not more than 30 mass parts.

5. The method for producing a calcium-containing composition with fixed $CO_2$ according to claim 1, **characterized in that** the temperature of the $CO_2$-containing gas is made not lower than 60 degree Celsius.

6. The method for producing a composition containing calcium with fixed $CO_2$ according to claim 5, **characterized in that** the temperature of the $CO_2$-containing gas is made not lower than 100 degree Celsius.

7. The method for producing a calcium-containing composition with fixed $CO_2$, according to one of claims 1 to 6, **characterized in that** the water content of the calcium-containing composition with fixed $CO_2$ is made not more than 1 mass%.

8. The method for producing a calcium-containing composition with fixed $CO_2$ according to claim 7, **characterized in that** the reactor is a fluidized bed reactor.

9. The method for producing a calcium-containing composition with fixed $CO_2$ according to claim 1, **characterized in that** the $CO_2$-containing gas is one extracted from a cement clinker production plant.

10. The method for producing a calcium-containing composition with fixed $CO_2$ according to claim 1, **characterized in that** the $CO_2$-containing gas is one extracted from a thermal power generation plant.

11. The method for producing a calcium-containing composition with fixed $CO_2$ according to claim 1, **characterized by** a further step for mixing the calcium-containing composition with fixed $CO_2$ into cement to a concentration not more than 5 mass%.

12. The method for producing a calcium-containing composition with fixed $CO_2$ according to claim 1, **characterized by** a further step of using the calcium-containing composition with fixed $CO_2$ as a concrete mixture material.

13. The method for producing a calcium-containing composition with fixed $CO_2$ according to claim 1, **characterized in that** the liquid water contains ammonia.

14. An apparatus for producing a calcium-containing composition with fixed $CO_2$, by making a mixture of a calcium-containing composition before fixing $CO_2$ and water in contact with a $CO_2$-containing gas, comprising:

a storage facility for storing the calcium-containing composition;

a fluidized bed reactor for carrying out carbonation of the calcium-containing composition;

a metered-volume feeder for supplying the calcium-containing composition to the fluidized bed reactor;

a water injection device for mixing water into the calcium-containing composition before feeding to the fluidized bed reactor;

a blower for supplying the $CO_2$-containing gas to the fluidized bed reactor;

a dust collector for collecting dust contained in exhaust gas from the fluidized bed reactor; and

a blower for suctioning the exhaust gas from the dust collector.

FIG. 1

FIG. 2

Exhaust Gas

Mesh

(i) Cylindrical Container

Mesh

CO2 Gas, N2 Gas

(j) Heater for Gas

(th) Thermometer

FIG. 3

FIG. 4

FIG. 5

Ash      Water

(p)

(r)

(k)

(n)

Hot CO₂
Containing Gas

(s)

Exhaust Gas

(t)

(u)

Product

(m)

Europäisches
Patentamt

European
Patent Office

Office européen
des brevets

**EUROPEAN SEARCH REPORT**

Application Number

EP 24 16 4781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/152554 A1 (SKOCEK JAN [DE] ET AL) 19 May 2022 (2022-05-19) * paragraphs [0007], [0020] - [0029], [0042], [0046] - [0052]; figure 2 * ----- | 1-14 | INV. B01D53/12 B01D53/62 F23J15/00 B01D53/81 |
| X | US 2013/284073 A1 (GARTNER ELLIS [FR]) 31 October 2013 (2013-10-31) * paragraphs [0003] - [0026] * ----- | 1-13 | B01D53/83 |
| A | | 14 | |
| A | US 7 906 086 B2 (COMRIE DOUGLAS C [US]) 15 March 2011 (2011-03-15) * columns 17-20; figures 1-3 * ----- | 1-14 | |

| | |
|---|---|
| | TECHNICAL FIELDS SEARCHED (IPC) |
| | B01D C04B C08K F23J |

The present search report has been drawn up for all claims

| Place of search | Date of completion of the search | Examiner |
|---|---|---|
| The Hague | 26 June 2024 | Bocciardo, Davide |

EPO FORM 1503 03.82 (P04C01)

## ANNEX TO THE EUROPEAN SEARCH REPORT
## ON EUROPEAN PATENT APPLICATION NO.

EP 24 16 4781

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | Publication date | Patent family member(s) | Publication date |
|---|---|---|---|
| US 2022152554 A1 | 19-05-2022 | AU 2020291602 A1 | 07-10-2021 |
| | | CA 3138976 A1 | 17-12-2020 |
| | | CN 113950365 A | 18-01-2022 |
| | | DK 3750619 T3 | 28-03-2022 |
| | | EP 3750619 A1 | 16-12-2020 |
| | | ES 2909489 T3 | 06-05-2022 |
| | | PL 3750619 T3 | 09-05-2022 |
| | | PT 3750619 T | 28-03-2022 |
| | | US 2022152554 A1 | 19-05-2022 |
| | | WO 2020249444 A1 | 17-12-2020 |
| US 2013284073 A1 | 31-10-2013 | CA 2823939 A1 | 19-07-2012 |
| | | CN 103313772 A | 18-09-2013 |
| | | EP 2476478 A1 | 18-07-2012 |
| | | EP 2663387 A1 | 20-11-2013 |
| | | KR 20140058405 A | 14-05-2014 |
| | | US 2013284073 A1 | 31-10-2013 |
| | | WO 2012095406 A1 | 19-07-2012 |
| US 7906086 B2 | 15-03-2011 | AU 2007225296 A1 | 20-09-2007 |
| | | BR PI0708702 A2 | 07-06-2011 |
| | | CA 2646462 A1 | 20-09-2007 |
| | | CN 101400430 A | 01-04-2009 |
| | | CN 102600707 A | 25-07-2012 |
| | | EP 2001577 A2 | 17-12-2008 |
| | | EP 2438976 A1 | 11-04-2012 |
| | | EP 2438977 A1 | 11-04-2012 |
| | | EP 2438978 A1 | 11-04-2012 |
| | | EP 2468388 A1 | 27-06-2012 |
| | | EP 2481472 A1 | 01-08-2012 |
| | | ES 2440804 T3 | 30-01-2014 |
| | | ES 2440946 T3 | 31-01-2014 |
| | | ES 2445340 T3 | 03-03-2014 |
| | | ES 2488825 T3 | 29-08-2014 |
| | | ES 2521415 T3 | 12-11-2014 |
| | | ES 2521590 T3 | 13-11-2014 |
| | | JP 2009529408 A | 20-08-2009 |
| | | RU 2008140176 A | 20-04-2010 |
| | | RU 2011142279 A | 27-04-2013 |
| | | US 2010068109 A1 | 18-03-2010 |
| | | US 2011135548 A1 | 09-06-2011 |
| | | US 2012121488 A1 | 17-05-2012 |
| | | WO 2007106372 A2 | 20-09-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020037493 A

- JP 2021155270 A

**Non-patent literature cited in the description**

- **AKIFUMI MOTOHATA et al.** Carbonation for Immobilization of lead in bottom ash. *Environmental Engineering Research,* 2004, vol. 41, 459

- *Environmental Engineering Research,* 2004, vol. 41, 459-467